# EUROPÄISCHE PATENTSCHRIFT

(11) **EP 3 715 379 B1**
(45) Veröffentlichungstag und Bekanntmachung des Hinweises auf die Patenterteilung: **06.12.2023**
(21) Anmeldenummer: 19165082.9
(22) Anmeldetag: 26.03.2019
(51) Int. Cl.: C08C 4/00, C08J 3/20, C08L 9/06, B29B 7/18, B29B 7/74, B29B 7/82

(54) **VERFAHREN ZUR HERSTELLUNG EINER KAUTSCHUKGRUNDMISCHUNG**
METHOD FOR PRODUCING A RUBBER BASE COMPOUND
PROCÉDÉ DE FABRICATION D'UN MÉLANGE DE BASE DE CAOUTCHOUC

(43) Veröffentlichungstag der Anmeldung: 30.09.2020
(73) Patentinhaber: Continental Reifen Deutschland GmbH, 30165 Hannover (DE)
(72) Erfinder: Weinreich, Hajo, 30165 Hannover (DE); Pereira, Armando, 30165 Hannover (DE)
(74) Vertreter: Continental Corporation

(56) Entgegenhaltungen:
- EP-A1- 1 167 426
- EP-A1- 1 213 110
- US-A1- 2012 048 437
- DATABASE WPI Week 200308 Thomson Scientific, London, GB; AN 2003-087638 XP002794228, & JP 2002 356583 A (ASAHI KASEI KK) 13. Dezember 2002 (2002-12-13)

## Beschreibung

Die Erfindung betrifft ein Verfahren zur Herstellung einer zumindest einen Dienkautschuk und zumindest Kieselsäure enthaltenden Kautschukgrundmischung, die zumindest ein Silan-Kupplungsagens aufweist. Ferner betrifft die Erfindung die Verwendung der nach dem Verfahren hergestellten Kautschukgrundmischung für Fahrzeugluftreifen.

Im Allgemeinen erfolgt die Herstellung einer Kautschukmischung mit Dienkautschuk, polarem Füllstoff und Silan-Kupplungsagens in zwei Mischstufen, nämlich durch Herstellung einer Grundmischung und anschließender Herstellung einer Fertigmischung. Während der Herstellung der Grundmischung werden alle Bestandteile der Mischung, wie Kautschuke, Füllstoffe, Silan-Kupplungsagenzien, Verarbeitungshilfsmittel, Alterungsschutzmittel, Ozonschutzmittel und weitere übliche Zusatzstoffe mit Ausnahme der Vulkanisationschemikalien (Schwefel, Vulkanisationsbeschleuniger, Harze u. a.), miteinander unter Energieeintrag vermischt. Die Temperaturen für die Herstellung der Grundmischung liegen üblicherweise bei 140 bis 180 °C, um eine ausreichend schnelle Reaktion zwischen polarem Füllstoff und Silan-Kupplungsagens zu gewährleisten. Nach der Fertigstellung der Grundmischung, deren Abkühlung und eventueller Lagerung werden dann zur Herstellung der Fertigmischung die restlichen Zusatzstoffe, i. a. alle Vulkanisationsbestandteile, bei niedriger Temperatur, in der Regel 100 bis 120 °C, eingemischt. Die Verarbeitungstemperatur der Fertigmischung liegt niedrig, damit ein vorzeitiges Anspringen des Vulkanisationssystems verhindert wird. Zur Herstellung der Kautschukmischungen werden üblicherweise Innenmischer eingesetzt, bei denen der Misch- und Knetprozess durch Knetschaufeln, die sich in einem Mischtrog bzw. einer Mischkammer mit oder ohne Einwirkung eines zusätzlichen Stempels gegeneinander drehen, durchgeführt wird. Derartige Innenmischer werden als Kneter bezeichnet.

Verfahren zur Herstellung von Kautschuk(fertig)mischungen sind in der DE 44 07 144 A1 und der EP 0 618 055 B1 beschrieben.

In der DE 44 07 144 A1 wird eine Kautschukfertigmischung dadurch hergestellt, dass in einer ersten Stufe in einem Stempelkneter aus Kautschuk und nicht reaktiven Zusatzstoffen chargenweise eine Grundmischung hergestellt wird und dann die Grundmischung in einer zweiten Stufe unter Hinzufügen von reaktiven Zusatzstoffen ebenfalls chargenweise in einem zweiten Kneter fertig gemischt wird. Als Vorrichtung zur Durchführung des Verfahrens kann eine Aggregatkombination aus Stempelkneter und einem darunter angeordneten stempellosem Kneter eingesetzt werden, wobei im zweiten Kneter zur besseren Kühlung neben der Grundmischung auch noch eine Kautschukmischung zugefüttert wird, die kälter ist als die Grundmischung.

Die EP 0 618 055 B1 beschreibt ein Verfahren zum Verarbeiten von nicht reaktive Zusatzstoffe enthaltenden Kautschukgrundmischungen zu Kautschukfertigmischungen unter Verwendung eines Stempelkneters, wobei dem Stempelkneter eine vorher hergestellte, fertige Grundmischung zum Plastizieren zugeführt wird und nach dem Plastizieren die Charge unmittelbar einem stempellosen Kneter zugeführt wird, um die Fertigmischung durch Zugabe von reaktiven Zusatzstoffen bei verringerter Temperatur im Vergleich zum Stempelkneter fertig zu mischen.

Beide vorgenannten Schriften beschäftigen sich nicht mit Kautschukmischungen, die polare Füllstoffe, wie beispielsweise Kieselsäure, enthalten und deren speziellen Anforderungen an die Verarbeitung. Bei Kautschukmischungen mit polaren Füllstoffen ist nämlich zu beachten, dass zur Verbesserung der Verarbeitbarkeit und zur Anbindung der polaren Füllstoffe an unpolare Kautschuke so genannte Silan-Kupplungsagenzien nötig sind, die mit den polaren Gruppen des Füllstoffs reagieren und im weiteren Verlauf die Anbindung an den Kautschuk ermöglichen. Solche aus dem Stand der Technik bekannten Kupplungsagenzien sind z. B. bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Ferner werden als Silan-Kupplungsagenzien geblockte oder ungeblockte Mercaptosilane und auch so genannte "silated core polysulfides" (SCP) eingesetzt. Letztere sind multimere Silan-Kupplungsagenzien mit Oligoschwefelbrücken, welche eine Cyclohexyl-Abstandsgruppe (Cyclohexylspacer) besitzen.

Bei der Verarbeitung von Kautschukmischungen mit polarem Füllstoff und Silan-Kupplungsagens ist daher besonderes Augenmerk auf die Temperaturführung im Mischer zu richten, da die chemische Reaktion des polaren Füllstoffs mit dem Silan-Kupplungsagens stattfinden muss, ohne dass es gleichzeitig zu einer Zersetzung des Silan-Kupplungsagenzes kommt. In der Regel wird die Herstellung von Grundmischungen mit den vorgenannten Bestandteilen daher bei Temperaturen von 140 bis 160 °C durchgeführt, wobei bekannt ist, dass die Reaktion zwischen polarem Füllstoff und Silan-Kupplungsagens mit steigender Mischtemperatur beschleunigt werden kann. Eine schnelle, möglichst vollständige Reaktion des polaren Füllstoffs mit dem Silan-Kupplungsagens resultiert bei den aus diesen Mischungen erzeugten Vulkanisaten in einer besseren Verstärkung, einem besseren Abriebverhalten und einem niedrigen Rollwiderstand beim Einsatz in Fahrzeugluftreifen. Eine Verbesserung dieser Eigenschaften gelingt ebenfalls durch die Verwendung funktionalisierter Polymere, die in der Lage sind, mit dem polaren Füllstoff chemisch zu reagieren. Allerdings führt die Verwendung derartiger funktionalisierter Polymere zu einer stark erhöhten Mischungsviskosität und Steifigkeit der unvulkanisierten Mischung, was die Verarbeitung der Mischungen deutlich erschwert oder sogar unmöglich macht.

Verfahren zur Herstellung von Kautschuk(grund)mischungen, die Kieselsäure und ein Silan-Kupplungsagens enthalten, sind beispielsweise aus der EP 1 213 110 B1 bekannt.

Die EP 1 213 110 B1 offenbart ein einfaches, mit geringem Zeitaufwand durchführbares Verfahren zur Herstellung einer kieselsäurehaltigen Kautschukgrundmischung, das in zwei Stufen in unterschiedlichen Mischern durchgeführt wird und bei dem die Kieselsäure mit dem Silan-Kupplungsagens reagiert, wobei im ersten Mischer die Temperatur der Mischungsbestandteile ausgehend von der Raumtemperatur kontinuierlich erhöht wird, wobei die Mischungsbestandteile dispergiert werden. Nach eine Zeitspanne ti, die beispielsweise 2 min betragen kann, wird eine Temperatur von z. B. 130 ° erreicht, bei der die Kieselsäure mit dem Silan-Kupplungsagens beginnt zu reagieren. Danach wird die Temperatur nur noch leicht erhöht, so dass sie im Temperaturbereich von 130 bis 180 °C liegt. Anschließend wird die Mischung in einen zweiten Mischer überführt und bei der Endtemperatur bei Auswurf aus dem ersten Mischer zu Ende gemischt, wobei die Temperatur konstant gehalten wird. Eine Erwärmung über zwei Plateau-Temperaturstufen wird nicht offenbart.

Auch die US 2012/048437 A1 offenbart ein Verfahren zur Herstellung von Kautschukgrundmischungen, die zumindest einen Dienkautschuk, Kieselsäure und zumindest ein Silan-Kupplungsagens aufweisen.

Der Erfindung liegt die Aufgabe zu Grunde, ein Verfahren zur Herstellung einer Kautschukgrundmischung bereitzustellen, das einfach, schnell, kostengünstig und mit energetischem Vorteil durchgeführt werden kann und das bei den aus der Mischung hergestellten Vulkanisaten zu einer verbesserten Verstärkung und einem verbesserten Rollwiderstand bei Einsatz im Reifen führt.

Gelöst wird diese Aufgabe erfindungsgemäß dadurch, dass bei dem Verfahren zur Herstellung der Kautschukgrundmischung
a) zunächst sämtliche Bestandteile der Kautschukgrundmischung unter einem Temperaturanstieg bis zu 125 bis 135 °C vermischt werden,
b) die Temperatur von 125 bis 135 °C über 40 bis 80 s unter Mischen gehalten wird,
c) im Anschluss die Temperatur auf 150 bis 160 °C unter Mischen erhöht wird,
d) die Temperatur von 150 bis 160 °C über 100 bis 200 s unter Mischen gehalten wird und
e) die Kautschukgrundmischung danach ausgeworfen wird.

Es hat sich überraschenderweise gezeigt, dass durch die spezielle Temperaturführung mit relativ niedrigen Temperaturen und zwei Temperaturplateaus eine Kautschukgrundmischung mit Kieselsäure und Silan-Kupplungsagens einfach und effizient hergestellt werden kann, wobei die die Verstärkung der aus diesen Kautschukgrundmischungen hergestellten Vulkanisate und damit das Abriebverhalten zu geringem Abrieb deutlich verbessert ist. Gleichzeitig können mit diesen Mischungen Reifen hergestellt werden, die sich durch einen deutlich reduzierten Rollwiderstand auszeichnen.

Unter einer Kautschukgrundmischung versteht der Fachmann eine Kautschukmischung die im Wesentlichen frei von Vulkanisationschemikalien ist. Bevorzugt ist die Mischung frei von Vulkanisationschemikalien. Sie ist dann bevorzugt frei von Schwefel, Vulkanisationsbeschleunigern und Vulkanisationsharzen.

Besonders gute Resultate hinsichtlich der Verarbeitbarkeit und der Vulkanisateigenschaften lassen sich erzielen, wenn die Temperatur von 125 °C bis 135 °C im Schritt b) über 50 bis 70 s unter Mischen gehalten wird.

Für eine optimale Anbindung von Silan-Kupplungsagens an den polaren Füllstoff hat es sich als vorteilhaft erwiesen, wenn die Temperatur von 150 bis 160 °C im Schritt d) über 120 bis 180 s unter Mischen gehalten wird.

Die nach dem erfindungsgemäßen Verfahren hergestellte Kautschukgrundmischung enthält zumindest einen Dienkautschuk. Zu den Dienkautschuken zählen alle Polymere mit einer ungesättigten Kohlenstoffkette, die sich zumindest teilweise von konjugierten Dienen ableiten. Es kann sich gemäß der Erfindung um unterschiedlichste Dienkautschuke auf der Basis von z. B. Butadien, Isopren und Styrol handeln. Vorzugsweise handelt es sich bei dem Dienkautschuk um Polyisopren, Polybutadien oder Styrol-Butadien-Kautschuk (Styrol-Butadien-Copolymer). Es können auch mehrere Dienkautschuke in der Kautschukmischung eingesetzt werden.

Gemäß einer vorteilhaften Weiterbildung der Erfindung enthält die Kautschukgrundmischung zumindest einen funktionalisierten Dienkautschuk. Die Dienkautschuke können am Kettenende und/oder entlang der Polymerkette und/oder in einem Kopplungszentrum mit zumindest einer Gruppe ausgewählt aus Epoxygruppen, Hydroxygruppen, Carboxygruppen, Silan-Sulfidgruppen, Aminogruppen, Siloxangruppen, Organosiliciumgruppen, Phthalocyaningruppen und Aminogruppen enthaltenden Alkoxysilylgruppen funktionalisiert sein. Die funktionalisierten Kautschuke können auch mehrere unterschiedliche Funktionalitäten aufweisen. Mit dem erfindungsgemäßen Verfahren gelingt es derartige Polymere effizient zu verarbeiten, was mit Verfahren mit höheren Temperaturen und anderer Temperaturführung nicht möglich ist, da dort die Verwendung funktionalisierte Polymere regelmäßig zu einer stark erhöhten Mischungsviskosität und Steifigkeit der grünen Mischung führt.

Die Kautschukgrundmischung enthält als polaren Füllstoff, zumindest Kieselsäure (Silika). Es können auch w polare Füllstoff im Gemisch eingesetzt werden.

Für besonders gute Eigenschaften beim Einsatz der Kautschukgrundmischung bei der Herstellung von Fahrzeugluftreifen hat es sich als vorteilhaft erweisen, wenn der polare Füllstoff Kieselsäure ist. Dabei können unterschiedlichste, dem Fachmann bekannte Kieselsäuretypen eingesetzt werden, die üblicherweise eine CTAB-Oberfläche (gemäß ASTM D 3765) von mehr als 40 m²/g aufweisen.

Das erfindungsgemäße Verfahren hat sich als besonders vorteilhaft für die Herstellung von Kautschukgrundmischungen erwiesen, die mehr als 90 phr Kieselsäure, bevorzugt 90 bis 180 phr Kieselsäure, enthalten. Bei derartigen Mischungen tritt verstärkt das Problem der erhöhten Mischungsviskosität und Steifigkeit der grünen, d. h. unvulkanisierten, Mischung auf.

Die in dieser Schrift verwendete Angabe phr (parts per hundred parts of rubber by weight) ist die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Die Kautschukgrundmischung enthält ferner zumindest ein Silan-Kupplungsagens. Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung und/ oder in Gegenwart von Vulkanisationschemikalien eine chemische Reaktion mit den Doppelbindungen des Polymers eingehen kann. Bei der letztgenannten Gruppe kann es sich z. B. um die folgenden chemischen Gruppen handeln: - SCN, -SH, -NH2 oder -Sx- (mit x = 2-8). So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S der Firma Evonik Industries) zugesetzt werden. Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT in verschiedenen Varianten von der Firma Momentive Performance Materials, USA, oder solche, die unter dem Namen VP Si 363 von der Firma Evonik Industries vertrieben werden. Es können mehrere Silan-Kupplungsagenzien gleichzeitig in der Mischung eingesetzt werden.

Besonders gute Ergebnisse hinsichtlich der gewünschten Vulkanisateigenschaften können erzielt werden, wenn das Silan-Kupplungsagens Bis(3-Triethoxysilylpropyl-)disulfid (TESPD) ist.

Die Kautschukgrundmischung kann weitere dem Fachmann bekannte Zuschlagstoffe in üblichen Mengen enthalten, wie z. B. Ruß, Weichmacher, Alterungsschutzmittel, Aktivatoren, Wachse, Harze, Mastikationshilfsmittel und Verarbeitungshilfsmittel.

Das Verfahren kann in unterschiedlichen Mischertypen durchgeführt werden. Vorzugsweise wird ein Innenmischer (Kneter) eingesetzt, der auch als Aggregatkombination mit anderen Innenmischern vorliegen kann. Eine derartige Aggregatkombination ist beispielsweise der sogenannte Tandemmischer, eine Aggregatkombination aus Stempelkneter und stempellosem Kneter.

Nach der Herstellung der Kautschukgrundmischung kann diese nach dem Fachmann bekannten Verfahren zu einer Fertigmischung mit den Vulkanisationschemikalien weiterverarbeitet werden. Im Anschluss erfolgt die Weiterverarbeitung zu unterschiedlichsten Gummiprodukten.

Die nach dem erfindungsgemäßen Verfahren hergestellte Kautschukgrundmischung kann für die Herstellung unterschiedlichster Gummiprodukte verwendet werden. Bevorzugt wird die Fertigmischung für die Herstellung von Fahrzeugluftreifen verwendet, da die aus den Mischungen resultierenden Vulkanisate sich durch verbesserte reifenrelevante Eigenschaften im Hinblick auf Rollwiderstand und Abrieb auszeichnen.

Die Erfindung soll nun anhand von Vergleichs- und Ausführungsbeispielen, die in der Tabelle 1 zusammengefasst sind, näher erläutert werden. Bei sämtlichen in der Tabelle enthaltenen Mischungsbeispielen sind die angegebenen Mengenangaben Gewichtsteile, die auf 100 Gewichtsteile Gesamtkautschuk bezogen sind (phr).

Für die Vergleichsversuche (V) wurden Kautschukgrundmischungen nach einem herkömmlichen Verfahren hergestellt, bei dem zunächst Polymere, Kieselsäure, Silan-Kupplungsagens und die weiteren Zuschlagstoffe gemäß Tabelle 1 mit Ausnahme der Vulkanisationschemikalien (Schwefel und Vulkanisationsbeschleuniger) in einen Innenmischer gegeben wurden und dann wurde durch Mischen unter einem Temperaturanstieg bis auf 155 °C bzw. 165 °C erwärmt. Bei 155 °C wurde die Temperatur über 180 s gehalten und dann die Grundmischung ausgeworfen. Bei 165 °C wurde die Temperatur über 90 s gehalten und dann die Grundmischung ausgeworfen.

Für das erfindungsgemäße Verfahren (E) wurden zunächst Polymere, Kieselsäure, Silan-Kupplungsagens und die weiteren Zuschlagstoffe gemäß Tabelle 1 mit Ausnahme der Vulkanisationschemikalien (Schwefel und Vulkanisationsbeschleuniger) in einen Innenmischer gegeben. Dann wurde durch Mischen unter einem Temperaturanstieg bis auf 130 °C erwärmt, bei dieser Temperatur über 60 s gehalten, im Anschluss unter Mischen bis zu einer Temperatur von 155 °C weiter erwärmt und bei der Temperatur von 155 °c über 150 s unter Mischen gehalten. Dann wurde die Mischung ausgeworfen.

Alle nach den vorgenannten Verfahren erzeugten Kautschukgrundmischungen wurden im Folgenden zu Kautschukfertigmischungen verarbeitet, indem die Grundmischungen, Vulkanisationsbeschleuniger und Schwefel (Mengen: s. Tab. 1) in einen Innenmischer gegeben wurden und bis zu einer Temperatur von 100 °C unter Mischen erwärmt wurden. Diese Temperatur wurde über 100 s gehalten und im Anschluss die fertige Fertigmischung ausgeworfen.

Es wurde der dynamische Speichermodul (Steifigkeit) G' der unvulkanisierten Mischung bei 1 % Dehnung in Anlehnung an ASTM D6601 vom zweiten Dehnungsdurchlauf bei 1 Hz und 70 °C als Maß für die Verarbeitbarkeit der Mischung ermittelt. Ferner wurden aus sämtlichen Mischungen Prüfkörper durch 20-minütige Vulkanisation unter Druck bei 160 °C hergestellt und mit diesen Prüfkörpern für die Kautschukindustrie typische Materialeigenschaften mit den im Folgenden angegebenen Testverfahren ermittelt:
- Differenz aus dynamischem Speichermodul G'(1%) und G'(100%) mittels RPA (= *engl.* "rubber process analyzer") in Anlehnung an ASTM D6601 vom zweiten Dehnungsdurchlauf bei 1 Hz und 70°C; angegebener Wert: G' bei 1 % minus G' bei 100 % als Maß für den Rollwiderstand
- Rückprallelastizität bei 70 °C gemäß DIN 53 512 als Maß für den Rollwiderstand
- Quotient aus Spannungswert M bei 300 % Dehnung und bei 50 % Dehnung jeweils gemessen bei Raumtemperatur gemäß DIN 53 504 als Maß für die Verstärkung (Steifigkeit) und damit den Abrieb

Die gemessenen Eigenschaften wurden auf die Mischung V(1) bezogen. Deren Werte wurden als 100 % gesetzt. Werte größer 100 stellen eine Verbesserung der entsprechenden Eigenschaft dar.

**Tabelle 1**

| **Bestandteile** | Einheit | V(1) | V(2) | E(3) | V(4) | V(5) | E(6) |
|---|---|---|---|---|---|---|---|
| | | 155°C | 165°C | | 155°C | 165°C | |
| NR | phr | 10 | 10 | 10 | 10 | 10 | 10 |
| SSBR^{a} | phr | 90 | 90 | 90 | - | - | - |
| SSBR funktionalisiert^{b} | phr | - | - | - | 90 | 90 | 90 |
| Ruß N339 | phr | 5 | 5 | 5 | 5 | 5 | 5 |
| Kieselsäure | phr | 105 | 105 | 105 | 105 | 105 | 105 |
| Silankupplungsagens^{c} | phr | 8,5 | 8,5 | 8,5 | 8,5 | 8,5 | 8,5 |
| Weichmacheröl | phr | 45 | 45 | 45 | 45 | 45 | 45 |
| Zinkoxid | phr | 3 | 3 | 3 | 3 | 3 | 3 |
| Stearinsäure | phr | 1 | 1 | 1 | 1 | 1 | 1 |
| Ozonschutzwachs | phr | 2 | 2 | 2 | 2 | 2 | 2 |
| Alterungsschutzmittel | phr | 6 | 6 | 6 | 6 | 6 | 6 |
| Beschleuniger | phr | 4,6 | 4,6 | 4,6 | 4,6 | 4,6 | 4,6 |
| Schwefel | phr | 1,9 | 1,9 | 1,9 | 1,9 | 1,9 | 1,9 |

| **Eigenschaften** | | | | | | | |
|---|---|---|---|---|---|---|---|
| G' (1%) unvulk. | % | 100 | 97 | 99 | 62 | 65 | 97 |
| G' (1%) vulk. - G'(100%) vulk. | % | 100 | 93 | 110 | 109 | 104 | 125 |
| Rückprallelastizität bei 70°C | % | 100 | 99 | 105 | 112 | 118 | 121 |
| M(300%) / M(50%) | % | 100 | 102 | 118 | 105 | 108 | 126 |

| | | | | | | | |
|---|---|---|---|---|---|---|---|
| ^{a} unfunktionalisierter SSBR, Nipol^{®} SBR NS210, Zeon Corporation ^{b} funktionalisierter SSBR, Asaprene^{™} L250, Asahi Rubber Inc. ^{c} Silankupplungsagens, 3,3 `-Bis(triethoxysilylpropyl)disulfid (TESPD) | | | | | | | |

Aus der Tabelle 1 wird ersichtlich, dass die nach dem erfindungsgemäßen Verfahren gemischten Kautschukmischungen E(3) und E(6) deutlich verbesserte Werte bei den Indikatoren für den Rollwiderstand von Reifen und die Verstärkung bzw. den Abrieb der Vulkanisate aufweisen. Gleichzeitig bleiben die Mischungen gut verarbeitbar, was sich in dem dynamischen Speichermodul G`(1%) der unvulkansierten Mischungen widerspiegelt. Durch den Einsatz funktionalisierter Polymere können der Rollwiderstand und der Abrieb zwar auch verbessert werden, aber ohne Anwendung des erfindungsgemäßen Mischverfahrens (s. V(4) und V(5)) ergibt sich ein Prozessverhalten, welches keine effektive Verarbeitung mehr möglich macht. Bei gleichzeitigem Einsatz des erfindungsgemäßen Verfahrens und funktionalisiertem Dienkautschuk können die Rollwiderstands- und Abriebsindikatoren weiter verbessert werden.

## Patentansprüche

1. Verfahren zur Herstellung einer zumindest einen Dienkautschuk und zumindest Kieselsäure enthaltenden Kautschukgrundmischung, die zumindest ein Silan-Kupplungsagens aufweist,
**dadurch gekennzeichnet, dass**
a) zunächst sämtliche Bestandteile der Kautschukgrundmischung unter einem Temperaturanstieg bis zu 125 bis 135 °C vermischt werden,
b) die Temperatur von 125 bis 135 °C über 40 bis 80 s unter Mischen gehalten wird,
c) im Anschluss die Temperatur auf 150 bis 160 °C unter Mischen erhöht wird,
d) die Temperatur von 150 bis 160 °C über 100 bis 200 s unter Mischen gehalten wird und
e) die Kautschukgrundmischung danach ausgeworfen wird.

2. Verfahren nach Anspruch 1, **dadurch gekennzeichnet, dass** Kautschukgrundmischung frei von Vulkanisationschemikalien ist.

3. Verfahren nach Anspruch 2, **dadurch gekennzeichnet, dass** sie frei von Schwefel, Vulkanisationsbeschleunigern und Vulkanisationsharzen ist.

4. Verfahren nach zumindest einem der vorhergehenden Ansprüche, **dadurch gekennzeichnet, dass** die Temperatur von 125 bis 135 °C im Schritt b) über 50 bis 70 s unter Mischen gehalten wird.

5. Verfahren nach zumindest einem der vorhergehenden Ansprüche, **dadurch gekennzeichnet, dass** die Temperatur von 150 bis 160 °C im Schritt d) über 120 bis 180 s unter Mischen gehalten wird.

6. Verfahren nach zumindest einem der vorhergehenden Ansprüche, **dadurch gekennzeichnet, dass** die Kautschukgrundmischung zumindest einen funktionalisierten Dienkautschuk enthält.

7. Verfahren nach zumindest einem der vorhergehenden Ansprüche, **dadurch gekennzeichnet, dass** die Kautschukgrundmischung mehr als 90 phr Kieselsäure enthält.

8. Verfahren nach zumindest einem der vorhergehenden Ansprüche, **dadurch gekennzeichnet, dass** Silan-Kupplungsagens Bis(3-Triethoxysilylpropyl-)disulfid (TESPD) ist.

9. Verwendung der nach dem Verfahren gemäß Anspruch 1 hergestellten Kautschukgrundmischung für Fahrzeugluftreifen.

## Claims

1. Process for producing a rubber base mixture containing at least one diene rubber and at least silica and comprising at least one silane coupling agent, **characterized in that**
a) initially all constituents of the rubber base mixture are mixed with an accompanying temperature increase up to 125°C to 135°C,
b) the temperature of 125°C to 135°C is maintained with mixing over 40 to 80 s,
c) the temperature is subsequently increased to 150°C to 160°C with mixing,
d) the temperature of 150°C to 160°C is maintained with mixing for 100 to 200 s
and
e) the rubber base mixture is subsequently discharged.

2. Process according to Claim 1, **characterized in that** the rubber base mixture is free from vulcanization chemicals.

3. Process according to Claim 2, **characterized in that** it is free from sulfur, vulcanization accelerators and vulcanization resins.

4. Process according to at least one of the preceding claims, **characterized in that** the temperature of 125°C to 135°C in step b) is maintained with mixing over 50 to 70 s.

5. Process according to at least one of the preceding claims, **characterized in that** the temperature of 150°C to 160°C in step d) is maintained with mixing over 120 to 180 s.

6. Process according to at least one of the preceding claims, **characterized in that** the rubber base mixture contains at least one functionalized diene rubber.

7. Process according to at least one of the preceding claims, **characterized in that** the rubber base mixture contains more than 90 phr of silica.

8. Process according to at least one of the preceding claims, **characterized in that** the silane coupling agent is bis(3-triethoxysilylpropyl)disulfide (TESPD).

9. Use of the rubber base mixture produced by the process according to Claim 1 for pneumatic vehicle tyres.

## Revendications

1. Procédé de fabrication d'au moins un caoutchouc diène et d'au moins un mélange de base de caoutchouc contenant de la silice, qui comprend au moins un agent de couplage de type silane,
**caractérisé en ce que**
a) on mélange d'abord l'ensemble des constituants du mélange de base de caoutchouc en présence d'une élévation de la température allant jusqu'à 125 à 135 °C,
b) on maintient la température à 125 à 135 °C pendant 40 à 80 secondes tout en mélangeant,
c) puis on élève la température à 150 à 160 °C tout en mélangeant,
d) on maintient la température à 150 à 160 °C pendant 100 à 200 secondes tout en mélangeant, et
e) puis on éjecte le mélange de base de caoutchouc.

2. Procédé selon la revendication 1, **caractérisé en ce que** le mélange de base de caoutchouc est exempt de composés chimiques de vulcanisation.

3. Procédé selon la revendication 2, **caractérisé en ce que** le mélange est exempt de soufre, d'accélérateurs de vulcanisation et de résines de vulcanisation.

4. Procédé selon au moins l'une des revendications précédentes, **caractérisé en ce qu'**on maintient la température de 125 à 135 °C dans l'étape b) pendant 50 à 70 secondes tout en mélangeant.

5. Procédé selon au moins l'une des revendications précédentes, **caractérisé en ce qu'**on maintient la température de 150 à 160 °C dans l'étape d) pendant 120 à 180 secondes tout en mélangeant.

6. Procédé selon au moins l'une des revendications précédentes, **caractérisé en ce que** le mélange de base de caoutchouc contient au moins un caoutchouc diène fonctionnalisé.

7. Procédé selon au moins l'une des revendications précédentes, **caractérisé en ce que** le mélange de base de caoutchouc contient plus de 90 phr de silice.

8. Procédé selon au moins l'une des revendications précédentes, **caractérisé en ce que** l'agent de couplage de type silane est le disulfure de bis-(3-triéthoxysilylpropyle) (TESPD).

9. Utilisation du mélange de base de caoutchouc fabriqué par le procédé selon la revendication 1 pour des pneus de véhicule.
